# FASCICULE DE BREVET EUROPEEN

(11) **EP 1 791 319 B1**
(45) Date de publication et mention de la délivrance du brevet: **10.05.2017**
(21) Numéro de dépôt: 06116011.5
(22) Date de dépôt: 23.06.2006
(51) Int. Cl.: H04W 36/00, H04L 12/723, H04W 8/08

(54) **Procédé de transfert d'une communication au sein d'un réseau de communication à routage hiérarchique**
Weiterreichungsverfahren in einem Netzwerk mit hierarchischem Routing
Method for performing handover in a hierachical routing communication network

(30) Priorité: 30.06.2005 FR 0551834
(43) Date de publication de la demande: 30.05.2007
(73) Titulaire: ALCATEL LUCENT, 92100 Boulogne-Billancourt (FR)
(72) Inventeur: Rombeaut, Jean-Pierre, 59600, MAUBEUGE (FR); Gras, Laurence, 91440, BURES SUR YVETTE (FR)
(74) Mandataire: El Manouni, Josiane

(56) Documents cités:
- EP-A- 1 434 396
- KARIM EL MALKI ET AL: "Simultaneous Bindings for Mobile IPv6 Fast Handovers" IETF STANDARD-WORKING-DRAFT, INTERNET ENGINEERING TASK FORCE, IETF, CH, no. 3, mai 2003 (2003-05), XP015012878 ISSN: 0000-0004

## Description

L'invention concerne les réseaux de communication à protocole Internet (ou réseaux IP) et supportant une gestion de mobilité de type hiérarchique (c'est-à-dire comprenant des points de présence (agents mère (ou HA pour « Home Agent ») et points d'ancrage (ou MAP pour « Mobility Anchor Point »)) organisés de façon hiérarchique), et plus précisément les transferts de communications, impliquant au moins un équipement (de communication) mobile, entre des équipements d'accès de tels réseaux.

On entend ici par « réseau IP » une fédération de sous-ensembles de réseaux IP (ou sous-réseaux IP) raccordés les uns aux autres au moyen d'équipements d'accès formant des noeuds, tels que des routeurs d'accès.

Par ailleurs, on entend ici par « réseau IP à gestion de mobilité de type hiérarchique » un réseau IP dans lequel les communications entre un premier équipement (ou noeud) mobile et un second équipement de communication se font via un équipement agent assurant la fonction d'agent mère (ou natif, ou encore HA) pour le premier équipement mobile, comme par exemple un routeur mère (ou natif), un point d'ancrage de mobilité (ou MAP), comme par exemple un routeur, et un équipement d'accès radio, comme par exemple un routeur d'accès.

En outre, on entend ici par « équipement de communication mobile » (ci-après appelé équipement mobile), ou « noeud mobile » (« mobile node »), tout équipement de communication radio mobile (ou portable) capable de se connecter à son (sous-)réseau mère (ou sous-réseau natif, ou encore « home network (subnet) ») ou à d'autres sous-réseaux, dits distants ou externes (ou étrangers, ou encore « visited networks »), afin d'échanger des données sous la forme de signaux avec un autre équipement de communication ou avec un sous-réseau. Il pourra donc s'agir, par exemple, de téléphones mobiles, ou d'ordinateurs portables ou d'assistants personnels numériques (ou PDA) équipés d'un module de communication.

Il est par ailleurs rappelé que chaque équipement mobile qui se raccorde à un réseau IP dispose d'une adresse IP mère (ou adresse IP native ou permanente, ou encore « home address ») qui correspond au préfixe du (sous-)réseau mère auquel il est habituellement connecté. Lorsqu'un équipement mobile est connecté à son réseau mère, les paquets de données (ou « datagrams ») dont il est le destinataire sont directement adressés à son adresse IP mère au moyen d'un protocole de routage classique de type « saut par saut » (ou « hop by hop »). Lorsque cet équipement mobile se déplace et qu'il veut se connecter à un sous-réseau distant (ou externe), il doit se configurer avec des adresses temporaires (ou complémentaires) locale et régionale, appelées « care-of addresses », constituées à partir d'un préfixe d'adresse fourni par le réseau IP, par exemple au moyen d'un mécanisme IPv6 conventionnel, tel qu'une auto-configuration avec ou sans état (ou « stateful or stateless »). Ces adresses temporaires doivent être associées à l'adresse IP mère lors d'une procédure d'enregistrement de lien (ou « binding update ») effectuée entre l'équipement mobile et son agent mère.

Comme le sait l'homme de l'art, il existe au sein des réseaux IP précités des protocoles de mobilité IP, comme par exemple MIPv6, chargés de rendre joignable à chaque instant un équipement mobile et d'assurer la continuité des communications en cours des équipements mobiles, notamment pendant les phases de transfert entre routeurs d'accès (plus connues sous le mot anglais « handover »). Ces protocoles permettent donc aux équipements mobiles de maintenir leur connectivité à l'Internet pendant un handover et de continuer de communiquer avec d'autres équipements après avoir changé leur point d'accès (ou d'attachement). Mais, ils nécessitent des opérations protocolaires et des échanges de signalisations qui introduisent une phase pendant laquelle l'équipement mobile n'est plus en mesure d'envoyer ou recevoir des paquets de données (ou « datagrams »).

Une version rapide du protocole MIPv6, appelée « FMIPv6 » (pour « Fast MIFv6 ») a certes été proposée pour limiter la durée de cette phase d'impossibilité d'échange de paquets, mais elle ne concerne que les transferts de communication entre des premier et second équipements d'accès connectés à un même point d'ancrage de mobilité, c'est-à-dire les situations de micro-mobilité (mobilité limitée à un unique site (ou point d'ancrage), et donc caractérisée par des déplacements locaux). Elle n'est donc pas applicable aux transferts de communication entre des premier et second équipements d'accès connectés respectivement à des premier et second points d'ancrage de mobilité, c'est-à-dire les situations de macro-mobilité. En outre, FMIPv6 ne permet que de rediriger une partie du trafic, ce qui, d'une part, ne permet pas de limiter suffisamment la durée de la phase d'impossibilité d'échange de paquets pendant un handover, et d'autre part, peut entraîner des pertes de paquets.

L'invention a donc pour but de remédier à l'inconvénient précité.

Elle propose à cet effet un procédé de transfert d'une communication, impliquant au moins un équipement mobile (en situation de macro-mobilité), entre des premier et second équipements d'accès radio connectés respectivement à des premier et second équipements (ou points) d'ancrage de mobility (ou « Mobility Anchor Points »), eux-mêmes connectés à un même équipement agent (ou « home agent ») assurant la fonction d'agent mère (ou natif) pour l'équipement mobile, au sein d'un réseau de communication à protocole Internet (IP) et à gestion de mobilité de type hiérarchique.

Ce procédé se caractérise par le fait qu'il consiste, chaque fois que l'équipement mobile a établi avec un autre équipement de communication une communication sur IP via l'équipement agent mère, le premier point d'ancrage et le premier équipement d'accès radio, et lorsqu'en outre l'équipement mobile détecte, lors d'un déplacement, le second équipement d'accès radio connecté au second point d'ancrage, à effectuer la combinaison d'étapes suivante :
i) communiquer à l'équipement mobile le préfixe d'adresse du second équipement d'accès afin qu'il constitue à partir de celui-ci des secondes adresses temporaires locale et régionale.
ii) communiquer les secondes adresses temporaires locale et régionale au premier point d'ancrage afin qu'il enregistre cette seconde adresse temporaire locale en correspondance de la seconde adresse temporaire régionale,
iii) communiquer la seconde adresse temporaire régionale, l'adresse IP mère de l'équipement mobile, et une donnée d'information présentant une valeur signalant un double adressage temporaire à l'équipement agent mère pour qu'il enregistre cette seconde adresse temporaire régionale en correspondance de l'adresse IP mère, puis transmette les paquets destinés à l'équipement mobile aux premier et second points d'ancrage qui sont désignés par les première et seconde adresses temporaires régionales stockées en correspondance de l'adresse IP mère, et
iv)déconnecter l'équipement mobile du premier équipement d'accès, puis supprimer de l'équipement agent mère l'enregistrement de la première adresse temporaire régionale de l'équipement mobile en correspondance de l'adresse IP mère, afin de transmettre à ce dernier les paquets qui lui sont destinés, via l'équipement agent mère, le second point d'ancrage et le second équipement d'accès.

Le procédé selon l'invention peut comporter d'autres caractéristiques qui peuvent être prises séparément ou en combinaison, et notamment :
- à l'étape i) le second équipement d'accès peut transmettre, par chacune de ses interfaces, à l'équipement mobile un message de type « avertissement de routeur » (ou « router advertisement ») comportant au moins son préfixe d'adresse (ou adresse du réseau), ainsi que de préférence l'adresse du point d'ancrage auquel il est connecté ;
- à l'étape i) l'équipement mobile peut constituer ses secondes adresses temporaires locale et régionale au moyen d'une procédure dite d'auto-configuration sans état (ou « stateless ») ;
- à l'étape ii) l'équipement mobile peut communiquer ses secondes adresses temporaires locale et régionale au second point d'ancrage au moyen d'un message d'enregistrement de lien (ou « binding update »). Le second point d'ancrage peut ensuite transmettre à l'équipement mobile un message d'acquittement d'enregistrement de lien (ou « binding acknowledgement ») après avoir procédé à l'enregistrement de la seconde adresse temporaire locale en correspondance de la seconde adresse temporaire régionale ;
- à l'étape iii) l'équipement mobile peut communiquer la seconde adresse temporaire régionale, l'adresse IP mère et la donnée d'information à l'équipement agent mère au moyen d'un message d'enregistrement de lien (ou « binding update »). L'équipement agent mère peut ensuite transmettre à l'équipement mobile un message d'acquittement d'enregistrement de lien (ou « binding acknowledgement ») après avoir procédé à l'enregistrement de la seconde adresse temporaire régionale en correspondance de l'adresse IP mère et de la première adresse temporaire régionale ;
- à l'étape iv) l'équipement mobile peut transmettre à l'équipement agent mère un message d'enregistrement de lien (ou « binding update ») comportant sa première adresse temporaire régionale et son adresse IP mère et lui demandant de supprimer l'enregistrement de cette première adresse temporaire régionale, afin qu'il ne conserve que l'enregistrement de la seconde adresse temporaire régionale en correspondance de l'adresse IP mère. L'équipement agent mère peut ensuite transmettre au premier équipement mobile un message d'acquittement d'enregistrement de lien (ou « binding acknowledgement ») après avoir procédé à la suppression de l'enregistrement de la première adresse temporaire régionale.

L'invention propose également un équipement d'agent mère agencé de manière à mettre en oeuvre une partie d'un procédé de transfert de communication du type de celui présenté ci-avant.

L'invention est particulièrement bien adaptée aux réseaux de type IPv6 (IP version n°6). Mais, elle concerne également les réseaux de type IPv4 supportant une gestion de mobilité hiérarchique.

D'autres caractéristiques et avantages de l'invention apparaîtront à l'examen de la description détaillée ci-après, et des dessins annexés, sur lesquels:

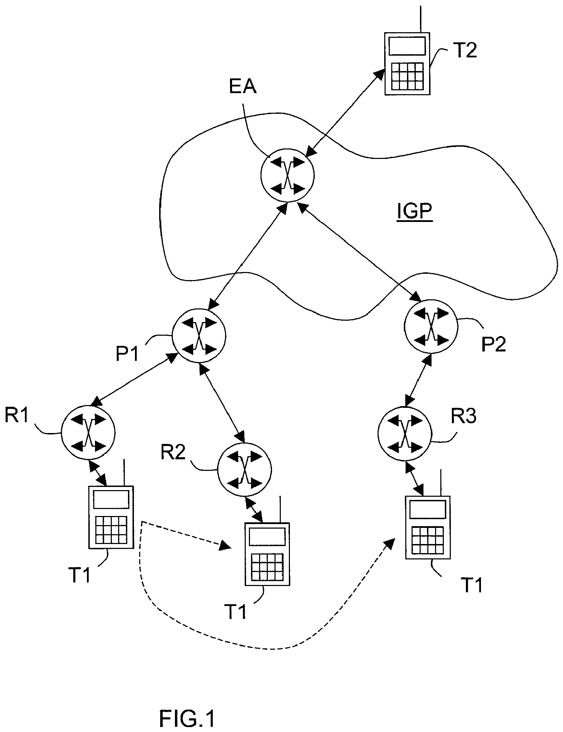

- la figure 1 illustre de façon très schématique une partie d'un réseau IP à gestion de mobilité hiérarchique selon l'invention, et
- à l'étape iii) l'équipement mobile peut communiquer la seconde adresse temporaire régionale, l'adresse IP mère et la donnée d'information à l'équipement agent mère au moyen d'un message d'enregistrement de lien (ou « binding update »). L'équipement agent mère peut ensuite transmettre à l'équipement mobile un message d'acquittement d'enregistrement de lien (ou « binding acknowledgement ») après avoir procédé à l'enregistrement de la seconde adresse temporaire régionale en correspondance de l'adresse IP mère et de la première adresse temporaire régionale ;
- à l'étape iv) l'équipement mobile peut transmettre à l'équipement agent mère un message d'enregistrement de lien (ou « binding update ») comportant sa première adresse temporaire régionale et son adresse IP mère et lui demandant de supprimer l'enregistrement de cette première adresse temporaire régionale, afin qu'il ne conserve que l'enregistrement de la seconde adresse temporaire régionale en correspondance de l'adresse IP mère. L'équipement agent mère peut ensuite transmettre au premier équipement mobile un message d'acquittement d'enregistrement de lien (ou « binding acknowledgement ») après avoir procédé à la suppression de l'enregistrement de la première adresse temporaire régionale.

L'invention propose également un point d'ancrage de mobilité agencé de manière à mettre en oeuvre une partie d'un premier procédé de transfert de communication du type de celui présenté ci-avant.

L'invention propose également un équipement d'agent mère agencé de manière à mettre en oeuvre une partie d'un second procédé de transfert de communication du type de celui présenté ci-avant.

L'invention est particulièrement bien adaptée aux réseaux de type IPv6 (IP version n°6). Mais, elle concerne également les réseaux de type IPv4 supportant une gestion de mobilité hiérarchique.

D'autres caractéristiques et avantages de l'invention apparaîtront à l'examen de la description détaillée ci-après, et des dessins annexés, sur lesquels :
- la figure 1 illustre de façon très schématique une partie d'un réseau IP à gestion de mobilité hiérarchique selon l'invention, et
- la figure 2 illustre de façon schématique les principales opérations permettant de mettre en oeuvre des exemples de premier et second procédés de transfert de communication selon l'invention au sein du réseau IP à gestion de mobilité hiérarchique illustré sur la figure 1.

Les dessins annexés pourront non seulement servir à compléter l'invention, mais aussi contribuer à sa définition, le cas échéant.

L'invention a pour objet de permettre d'éviter la perte de paquets de données et la réduction de la phase pendant laquelle un équipement de communication mobile (ou noeud mobile) n'est plus en mesure d'envoyer ou recevoir des paquets de données, au cours d'un transfert de communication entre équipements d'accès radio connectés (ou rattachés) à des équipements (ou points) d'ancrage de mobilité éventuellement différents, au sein d'un réseau de communication à protocole Internet (IP) à gestion de mobilité de type hiérarchique (c'est-à-dire comprenant des points de présence (agents mère (HA) et points d'ancrage (MAP)) organisés de façon hiérarchique).

Dans ce qui suit, on considère à titre d'exemple non limitatif que le réseau IP est de type IPv6 et qu'il supporte, tout comme ses équipements de réseau et les équipements de communication mobile (ou noeuds mobiles) qui peuvent s'y connecter, le protocole de gestion de mobilité HMIPv6 (pour « Hierarchical Mobile IPv6 »). Mais, l'invention s'applique également aux réseaux IP de type IPv4, notamment, en changeant les messages utilisés pour la mise à jour de ce que l'on appelle des « binding caches » (mémoires d'enregistrement).

Par ailleurs, on considère dans ce qui suit, à titre d'exemple non limitatif, que les équipements de communication mobiles (ci-après appelés équipements (ou noeuds) mobiles) sont des assistants personnels numériques (ou PDAs) équipés d'un module de communication, par exemple de type WiFi ou WiMAX - IEEE 802.1x. Mais, l'invention n'est pas limitée à ce type d'équipement mobile. Elle concerne en effet tout équipement de communication radio mobile (ou portable) capable de se connecter à son (sous-)réseau mère (ou natif, ou encore « home network ») ou à d'autres sous-réseaux, dits distants (ou externes, ou « visited networks »), afin d'échanger des données sous la forme de signaux avec un autre équipement de communication (fixe ou mobile) ou avec un sous-réseau. Il pourra donc s'agir d'un téléphone mobile ou d'un routeur ou encore d'un ordinateur portable équipé d'un module de communication.

On se réfère tout d'abord à la figure 1 pour décrire schématiquement et brièvement un réseau IP à gestion de mobilité hiérarchique pouvant mettre en oeuvre les procédés de transfert de communication selon l'invention.

Un réseau IP peut être considéré comme une fédération de sous-ensembles de réseaux IP (ou sous-réseaux IP), ici matérialisée par le patatoïde référencé IGP (pour « Interior Gateway Protocol »), et comprenant généralement un sous-réseau principal (comme par exemple un réseau mère (ou natif)) d'au moins un noeud mobile T1, auquel sont raccordés d'autres sous-réseaux (ou réseaux d'accès).

On entend ici par « réseau mère (ou natif)» le sous-réseau auquel est habituellement connecté un noeud mobile T1, c'est-à-dire le sous-réseau auprès duquel il dispose d'une adresse IP mère (ou native) (ou « home address ») qui correspond à son préfixe.

Chaque noeud mobile est associé à un équipement agent mère EA, comme par exemple un routeur, appartenant à son réseau mère et constituant son agent mère (ou « home agent »). L'adresse IP mère d'un noeud mobile est enregistrée auprès de son agent mère. D'une manière générale, l'équipement agent mère EA stocke toutes les informations de position (et localisation) du noeud mobile qui lui est associé, c'est-à-dire les données de mobilité qui le concernent, et sert de lieu de transit des paquets de données (ou datagrams) qui doivent lui être transmis, lorsqu'il est connecté à un sous-réseau IP distant (ou « visited network »), différent de son réseau mère (comme c'est le cas dans l'exemple de la figure 1).

Parmi les données de mobilité stockées, il peut y avoir ce que l'homme de l'art appelle des adresses IP temporaires (ou complémentaires, ou encore « care-of addresses ») locale (LCoA) et régionale (RCoA). Ces adresses IP temporaires locale (LCoA) et régionale (RCoA) sont des adresses de routage de type « unicast » qui servent respectivement au routeur d'accès R1 (auquel est momentanément connecté un noeud mobile T1), et au point d'ancrage (de mobilité) P1 (auquel est connecté le routeur d'accès R1 et qui est connecté à l'agent mère EA du noeud mobile T1) pour joindre ledit noeud mobile T1. L'agent mère ne connaît que l'adresse temporaire régionale (RCoA) de chaque noeud mobile T1 qui lui est associé.

Les adresses IP temporaires locale (LCoA) et régionale (RCoA) sont déterminées par le noeud mobile T1 à partir du préfixe d'adresse (IP) du routeur d'accès auquel il est connecté, par exemple au moyen d'un mécanisme IPv6 conventionnel, tel qu'une auto-configuration avec ou sans état (ou « stateful or stateless »). Lorsqu'un noeud mobile T1 est effectivement connecté à un routeur d'accès R1 d'un sous-réseau distant, il doit prévenir son agent mère EA, afin qu'il enregistre son adresse IP temporaire régionale RCoA en correspondance de son adresse IP mère. Pour ce faire, il utilise une procédure d'enregistrement (ou « binding update») gérée par le protocole de mobilité (MIPv6). Grâce à cette adresse IP temporaire régionale RCoA un agent mère EA va pouvoir transmettre à un noeud mobile T1, qui lui est associé, les paquets de données (ou datagrams) qu'un noeud appelant T2 lui a transmis à son adresse IP mère. Plus précisément, chaque paquet adressé à l'adresse IP mère d'un noeud mobile T1, momentanément connecté à un sous-réseau distant, est intercepté par son agent mère EA, puis transmis, via un tunnel (passant par le point d'ancrage P1 auquel est raccordé son routeur d'accès R1 et par ledit routeur d'accès R1), audit noeud mobile T1 à l'adresse IP temporaire régionale RCoA qui est associée (dans sa base de données) à son adresse IP mère.

L'invention propose deux procédés de transfert de communication, impliquant un premier noeud mobile T1 et un second noeud T2 (éventuellement mobile), entre un premier routeur d'accès R1, auquel est momentanément connecté le premier noeud mobile T1 et qui est connecté à un premier point d'ancrage P1, lui-même connecté à l'agent mère EA du premier noeud mobile T1, et un second routeur d'accès R2 ou R3, vers lequel se dirige le premier noeud mobile T1 et qui est connecté au premier point d'ancrage P1 (micro-mobilité) ou à un second point d'ancrage P2, lui-même connecté à l'agent mère EA du premier noeud mobile T1 (macro-mobilité).

Ces deux procédés peuvent être mis en oeuvre au sein d'un réseau IP supportant une gestion de mobilité de type hiérarchique, d'une part, lorsque le premier noeud mobile T1 a établi avec le second noeud T2, une communication sur IP via son agent mère EA, le premier point d'ancrage P1 et le premier équipement d'accès R1, et d'autre part, lorsque le premier noeud mobile T1 a détecté en se déplaçant le second équipement d'accès R2 ou R3.

A ce stade, le premier noeud mobile T1 est configuré avec des adresses temporaires locale LCoA-1 et régionale RCoA-1. Par ailleurs, l'adresse temporaire régionale RCoA-1 est, d'une part, stockée dans la base de données de l'agent mère EA en correspondance de l'adresse IP mère, et d'autre part, connue du premier point d'ancrage P1. En outre, l'adresse temporaire locale LCoA-1 est connue du premier routeur d'accès R1 et du point d'ancrage P1 (où elle est stockée en correspondance de l'adresse temporaire régionale RCoA-1).

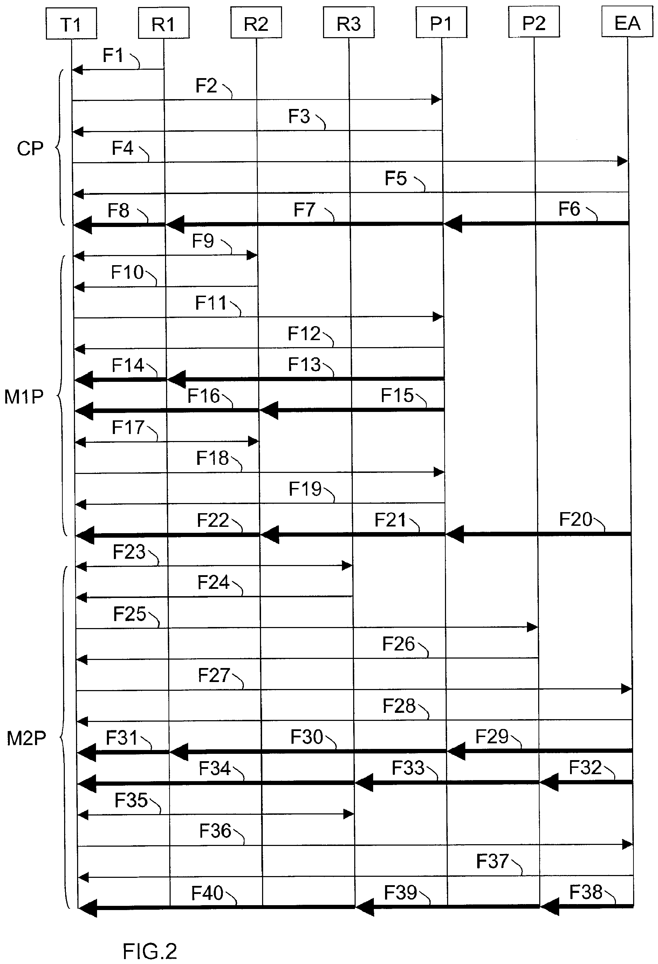

Le premier procédé selon l'invention est dédié à la micro-mobilité. Il consiste en une combinaison de trois étapes successives qui vont être détaillées ci-après, en référence à la figure 2.

Comme cela est illustré sur la figure 2, les opérations du premier procédé sont regroupées par une accolade référencée M1 P débutant au niveau de la flèche à double sens F9 et se terminant par la flèche F22.

Les flèches F1 à F8 représentent la phase de connexion CP classique (et bien connue de l'homme de l'art) pendant laquelle le premier noeud mobile T1 se raccorde à un premier routeur d'accès R1 appartenant à un premier sous-réseau d'accès, raccordé au réseau mère contenant l'agent mère AE dudit premier noeud mobile T1, via un premier point d'ancrage de mobilité P1.

La flèche F1 représente l'étape pendant laquelle le premier routeur d'accès R1 transmet au premier noeud mobile T1 un message de type « avertissement de routeur » (ou « router advertisement » RA) comportant son préfixe d'adresse (ou adresse du réseau), ainsi que de préférence l'adresse du point d'ancrage auquel il est connecté. Cette transmission se fait généralement en mode diffusion (ou « broadcast ») par chacune des interfaces du routeur d'accès R1.

A réception de ce message le premier noeud mobile T1 en extrait le préfixe d'adresse afin de constituer des premières adresses temporaires locale LCoA-1 et régionale RCoA-1. Pour ce faire, il peut par exemple utiliser une procédure dite d'auto-configuration sans état (ou « stateless ») AutoConf.

Puis, le premier noeud mobile T1 génère à destination du premier point d'ancrage P1 (F2), auquel est connecté le premier routeur d'accès R1, un message d'enregistrement de lien de type local (ou « local binding update »), comportant ses premières adresses temporaires locale LCoA-1 et régionale RCoA-1, afin qu'il les enregistre. Le protocole utilisé dans cette étape est de préférence HMIPV6.

A réception de ce message, le premier point d'ancrage P1 enregistre les premières adresses temporaires locale LCoA-1 et régionale RCoA-1 dans sa base de données. Puis, il génère à destination du premier noeud mobile T1 (F3) un message d'acquittement d'enregistrement de lien de type « Binding Ackowledgement »), afin de lui signaler qu'il l'a enregistré.

Ensuite, le premier noeud mobile T1 transmet à son agent mère EA (F4) un message d'enregistrement de lien (ou « Binding update »), contenant sa première adresse temporaire régionale RCoA-1 et son adresse IP mère. A réception de ce message, l'agent mère EA stocke dans sa base de données la première adresse temporaire régionale RCoA-1 en correspondance de l'adresse IP mère. Puis, il génère à destination du premier noeud mobile T1 (F5) un message d'acquittement d'enregistrement de lien de type « Binding Acknowledgement », afin de lui signaler qu'il a enregistré sa première adresse temporaire régionale RCoA-1.

Le premier noeud mobile T1 étant désormais enregistré auprès de son agent mère EA et du premier point d'ancrage P1, des paquets de données issus d'un second noeud T2 (éventuellement mobile) peuvent lui être transmis classiquement via son agent mère EA (F6), le premier point d'ancrage P1 (F7), et le premier routeur d'accès R1 (F8).

Il est important de noter que la phase de connexion CP, décrite ci-avant, est commune aux premier et second procédés.

La première étape i) du premier procédé selon l'invention est matérialisée sur la figure 2 par les flèches F9 et F10. Le premier noeud mobile T1 est connecté, par une connexion radio via une première interface, à la station de base qui est reliée au premier routeur d'accès R1, et a détecté (F9) un second routeur d'accès R2, qui est également raccordé au premier point d'ancrage P1. En effet, lorsque le premier noeud mobile T1 est suffisamment proche de la station de base qui est reliée au second routeur d'accès R2, il peut établir une connexion radio, via une seconde interface, avec cette station de base (F9) et donc recevoir (F10) les messages de type «avertissement de routeur » (ou « router advertisement ») qui sont transmis par le second routeur d'accès R2 sur chacune de ses interfaces et qui comportent son préfixe d'adresse (ou adresse du réseau), ainsi que l'adresse du point d'ancrage (ici P1) auquel il est connecté.

A réception de ce message le premier noeud mobile T1 en extrait le préfixe d'adresse afin de constituer des secondes adresses temporaires locale LCoA-2 et régionale RCoA-2. Pour ce faire, il peut par exemple utiliser une procédure dite d'auto-configuration sans état (ou « stateless ») AutoConf.

Dans une deuxième étape ii) (flèches F11 à F16), on communique au premier point d'ancrage P1 la seconde adresse temporaire locale LCoA-2, la première adresse temporaire régionale RCoA-1 et une donnée d'information (S) dont la valeur signale un double adressage temporaire, afin qu'il enregistre cette seconde adresse temporaire locale LCoA-2 en correspondance de la première adresse temporaire régionale RCoA-1, puis transmette aux premier R1 et second R2 routeurs d'accès, qui sont désignés par les première LCoA-1 et seconde LCoA-2 adresses temporaires locales, les paquets qui sont destinés au premier noeud mobile T1.

Pour ce faire, le premier noeud mobile T1 peut par exemple transmettre au premier point d'ancrage P1 (F11) un message d'enregistrement de lien de type local (ou « Local Binding update »), contenant sa seconde adresse temporaire locale LCoA-2, sa première adresse temporaire régionale RCoA-1 et la donnée d'information (S) dont la valeur signale le double adressage temporaire. Cette donnée d'information S est par exemple un bit de données qui est placé dans le champ appelé « reserved » (réservé) dans un message de type « Local Binding update ». Par exemple une valeur de S égale à 1 signale un double adressage temporaire. Le protocole utilisé dans cette étape est de préférence HMIPV6.

A réception de ce message, le premier point d'ancrage P1 analyse la valeur de la donnée d'information S, et lorsque celle-ci est égale à 1 (par exemple) il enregistre la seconde adresse temporaire locale LCoA-2 en correspondance de la première adresse temporaire régionale RCoA-1 dans sa base de données. Puis, il génère à destination du premier noeud mobile T1 (F12) un message d'acquittement d'enregistrement de lien de type « Binding Acknowledgement », afin de lui signaler qu'il a enregistré son double adressage temporaire.

Le premier point d'ancrage P1 peut alors momentanément transmettre non seulement au premier routeur d'accès R1, mais également au second routeur d'accès R2, qui sont tous les deux désignés par les première LCoA-1 et seconde LCoA-2 adresses temporaires locales, les paquets qui sont destinés au premier noeud mobile T1. Cette double transmission des mêmes paquets de données est matérialisée sur la figure 2 par les flèches F13 à F16. Plus précisément, les paquets reçus par le premier point d'ancrage P1, en provenance de l'agent mère EA et destinés au premier noeud mobile T1, sont, d'une part, transmis (F13) au premier routeur d'accès R1 afin qu'il les communique (F14) au premier noeud mobile T1, et d'autre part, transmis (F15) au second routeur d'accès R2 afin qu'il les communique (F16) à ce même premier noeud mobile T1. Cela est possible du fait que le premier noeud mobile T1 est déjà connecté aux premier R1 et second R2 routeurs d'accès par ses première et seconde interfaces, et qu'en raison de l'échange des messages de type « binding update » un tunnel passant par le second routeur d'accès R2 a été créé entre le premier noeud mobile T1 et le premier point d'ancrage P1.

Afin que le premier noeud mobile T1 puisse échanger des données avec les premier R1 et second R2 routeurs d'accès, il faut, d'une part, qu'il dispose de deux interfaces radio logiques de dialogue (comme indiqué précédemment), éventuellement couplées à une même antenne d'émission/réception, et qu'il soit capable d'intégrer une donnée d'information S dans un champ d'un message d'enregistrement de lien de type local (ou « Local Binding update »). Il faut par ailleurs que les points d'ancrage de mobilité disposent d'un dispositif de contrôle adapté de manière à analyser la donnée d'information S et à stocker momentanément deux adresses temporaires locales LCoA-1 et LCoA-2 en correspondance d'une même adresse temporaire régionale RCoA-1 afin de pouvoir transférer en parallèle des données identiques vers les deux routeurs d'accès désignés par ces deux adresses temporaires locales LCoA-1 et LCoA-2, lorsque la valeur de la donnée d'information S, qui accompagne une seconde adresse temporaire locale LCoA-2 et une première adresse temporaire régionale RCoA-1, signale un double adressage temporaire.

Le dispositif de contrôle adapté, d'un point d'ancrage de mobilité selon l'invention, peut être réalisé sous la forme de circuits électroniques, de modules logiciels (ou informatiques), ou d'une combinaison de circuits et de logiciels.

Dans une troisième étape iii) (flèches F17 à F22), on finalise tout d'abord le transfert de communication (ou « handover ») en déconnectant le premier noeud mobile T1 du premier routeur d'accès R1. Pour ce faire, on supprime du premier point d'ancrage P1 l'enregistrement de la première adresse temporaire locale LCoA-1 du premier noeud mobile T1, afin que ce dernier ne reçoivent que du second routeur d'accès R2 les paquets de données (ou datagrams) qui lui sont destinés.

Puis, le premier noeud mobile T1 génère à destination du premier point d'ancrage P1 (F18) un message d'enregistrement de lien de type local (ou « local binding update »), comportant ses premières adresses temporaires locale LCoA-1 et régionale RCoA-1, ainsi que des données d'information requérant la suppression de leur enregistrement. Ces données d'information peuvent être par exemple le champ appelé « durée de vie » (ou « lifetime ») dont la valeur nulle requiert une suppression d'enregistrement. Le protocole utilisé dans cette sous-étape est de préférence HMIPV6.

A réception de ce message, le premier point d'ancrage P1 supprime de sa base de données la première adresse temporaire locale LCoA-1 stockée en correspondance de la première adresse temporaire régionale RCoA-1, elle-même stockée en correspondance de la seconde adresse temporaire locale LCoA-2. Puis, il génère à destination du premier noeud mobile T1 (F19) un message d'acquittement d'enregistrement de lien de type « Binding Ackowledgement », afin de lui signaler qu'il a effectivement supprimé l'enregistrement de son ancienne première adresse temporaire locale LCoA-1.

Le premier noeud mobile T1 étant désormais enregistré auprès du premier point d'ancrage P1 avec sa seconde adresse temporaire locale LCoA-2 et sa première adresse temporaire régionale RCoA-1, les paquets de données issus d'un second noeud T2 (éventuellement mobile) lui sont désormais transmis classiquement via son agent mère EA (F20), le premier point d'ancrage P1 (F21), désigné par la première adresse temporaire régionale RCoA-1, et le second routeur d'accès R2 (F22), désigné par la seconde adresse temporaire locale LCoA-2.

Le second procédé selon l'invention est dédié à la macro-mobilité. Il consiste en une combinaison de quatre étapes successives qui vont être détaillées ci-après, en référence à la figure 2.

Comme cela est illustré sur la figure 2, les opérations du second procédé sont regroupées par une accolade référencée M2P débutant au niveau de la flèche à double sens F23 et se terminant par la flèche F40.

La première étape i) du second procédé débute, d'une part, une fois que le premier noeud mobile T1 a été enregistré auprès de son agent mère EA, d'un premier point d'ancrage P1, et d'un premier routeur d'accès R1 (c'est-à-dire après qu'une phase de connexion CP, décrite ci-avant (flèches F1 à F8), ait été effectuée), et d'autre part, lorsque le premier noeud mobile T1 a détecté (F23) un second routeur d'accès R3 qui est raccordé à un second point d'ancrage P2, lui-même connecté à l'agent mère EA. Comme indiqué précédemment, lorsque le premier noeud mobile T1 est suffisamment proche de la station de base qui est reliée au second routeur d'accès R3, il peut établir une connexion radio, via une seconde interface, avec cette station de base (F23) et donc recevoir (F24) les messages de type « avertissement de routeur » (ou « router advertisement ») qui sont transmis par le second routeur d'accès R3 sur chacune de ses interfaces et qui comportent son préfixe d'adresse (ou adresse du réseau), ainsi que de préférence l'adresse du point d'ancrage auquel il est connecté.

A réception de ce message le premier noeud mobile T1 en extrait le préfixe d'adresse afin de constituer des secondes adresses temporaires locale LCoA-2 et régionale RCoA-2. Pour ce faire, il peut par exemple utiliser une procédure dite d'auto-configuration sans état (ou « stateless ») AutoConf.

Dans une deuxième étape ii) (flèches F25 et F26), on communique au second point d'ancrage P2 les secondes adresses temporaires locale LCoA-2 et régionale RCoA-2 afin qu'il les enregistrent en correspondance l'une de l'autre dans sa base de données.

Pour ce faire, le premier noeud mobile T1 peut par exemple générer à destination du second point d'ancrage P2 (F25), auquel est connecté le second routeur d'accès R3, un message d'enregistrement de lien (ou « binding update »), comportant ses secondes adresses temporaires locale LCoA-2 et régionale RCoA-2, afin qu'il les enregistre dans sa base de données. Le protocole utilisé dans cette sous-étape est de préférence HMIPV6.

A réception de ce message, le second point d'ancrage P2 enregistre dans sa base de données les secondes adresses temporaires locale LCoA-2 et régionale RCoA-2 en correspondance l'une de l'autre. Puis, il génère à destination du premier noeud mobile T1 (F26) un message d'acquittement d'enregistrement de lien de type « Binding Ackowledgement », afin de lui signaler qu'il l'a effectivement enregistré.

Dans une troisième étape iii) (flèches F27 à F34), on communique à l'agent mère EA la seconde adresse temporaire régionale RCoA-2, l'adresse IP mère du premier noeud mobile T1, et une donnée d'information (S) présentant une valeur signalant un double adressage temporaire afin qu'il enregistre cette seconde adresse temporaire régionale RCoA-2 en correspondance de l'adresse IP mère, puis transmette les paquets destinés au premier noeud mobile T1 aux premier P1 et second P2 points d'ancrage qui sont désignés par les première RCoA-1 et seconde RCoA-2 adresses temporaires régionales stockées en correspondance de l'adresse IP mère.

Pour ce faire, le premier noeud mobile T1 peut par exemple transmettre à son agent mère EA (F27) un message d'enregistrement de lien (ou « Binding update »), contenant sa seconde adresse temporaire régionale RCoA-2, son adresse IP mère, et la donnée d'information (S) dont la valeur signale le double adressage temporaire. Comme dans le cas du premier procédé, cette donnée d'information S est par exemple un bit de données qui est placé dans le champ appelé « reserved » (réservé) dans un message Binding update. Par exemple une valeur de S égale à 1 signale un double adressage temporaire. Le protocole utilisé dans cette sous-étape est de préférence HMIPV6.

A réception de ce message, l'agent mère EA analyse la valeur de la donnée d'information S, et lorsque celle-ci est égale à 1 (par exemple) il enregistre dans sa base de données la seconde adresse temporaire régionale RCoA-2 en correspondance de l'adresse IP mère, elle-même stockée en correspondance de la première adresse temporaire régionale RCoA-1. Puis, il génère à destination du premier noeud mobile T1 (F28) un message d'acquittement d'enregistrement de lien de type « Binding Acknowledgement », afin de lui signaler qu'il a enregistré son double adressage temporaire.

L'agent mère EA peut alors momentanément transmettre non seulement au premier point d'ancrage P1, mais également au second point d'ancrage P2, qui sont tous les deux désignés par les première RCoA-1 et seconde RCoA-2 adresses temporaires régionales, les paquets qui sont destinés au premier noeud mobile T1. Cette double transmission des mêmes paquets de données est matérialisée sur la figure 2 par les flèches F29 à F34. Plus précisément, les paquets reçus par l'agent mère EA et destinés au premier noeud mobile T1, sont, d'une part, transmis (F29) au premier point d'ancrage P1 afin qu'il les communique au premier routeur d'accès R1 (F30), puis que ce dernier les communique au premier noeud mobile T1 (F31), et d'autre part, transmis (F32) au second point d'ancrage P2 afin qu'il les communique au second routeur d'accès R3 (F33), puis que ce dernier les communique à ce même premier noeud mobile T1 (F34). Cela est possible du fait que le premier noeud mobile T1 est déjà connecté aux premier R1 et second R3 routeurs d'accès par ses première et seconde interfaces, et qu'en raison de l'échange des messages de type « binding update » un tunnel passant par le second routeur d'accès R3 a été créé entre le premier noeud mobile T1 et le second point d'ancrage P2.

Comme indiqué précédemment, pour que le premier noeud mobile T1 puisse échanger des données avec les premier R1 et second R2 routeurs d'accès, il faut, d'une part, qu'il dispose de deux interfaces radio logiques de dialogue, éventuellement couplées à une même antenne d'émission/réception, et d'autre part, qu'il soit capable d'intégrer une donnée d'information S dans un champ d'un message d'enregistrement de lien de type « Binding update ». Il faut par ailleurs que l'agent mère EA comporte un dispositif de contrôle capable d'analyser la donnée d'information S et de stocker momentanément deux adresses temporaires régionales RCoA-1 et RCoA-2 en correspondance d'une même adresse IP mère afin de pouvoir transférer en parallèle des données identiques vers les deux points d'ancrage P1 et P2 désignés par ces deux adresses temporaires régionales RCoA-1 et RCoA-2, lorsque la valeur de la donnée d'information S, qui accompagne une seconde adresse temporaire régionale RCoA-2 et une adresse IP mère, signale un double adressage temporaire.

Le dispositif de contrôle adapté, d'un agent mère EA selon l'invention, peut être réalisé sous la forme de circuits électroniques, de modules logiciels (ou informatiques), ou d'une combinaison de circuits et de logiciels.

Dans une quatrième étape iii) (flèches F35 à F40), on finalise tout d'abord le transfert de communication (ou « handover ») en déconnectant le premier noeud mobile T1 du premier routeur d'accès R1. Pour ce faire, on supprime de l'agent mère EA l'enregistrement de la première adresse temporaire régionale RCoA-1 du premier noeud mobile T1, afin que ce dernier ne reçoivent que du second point d'ancrage P2, via le second routeur d'accès R2, les paquets de données (ou datagrams) qui lui sont destinés.

Puis, le premier noeud mobile T1 génère à destination de l'agent mère EA (F36) un message d'enregistrement de lien de type « binding update », comportant sa première adresse temporaire régionale RCoA-1, son adresse IP mère et des données d'information requérant la suppression de leur enregistrement. Comme dans le cas du premier procédé, ces données d'information peuvent être par exemple le champ appelé « durée de vie » (ou « lifetime ») dont la valeur nulle requiert une suppression d'enregistrement. Le protocole utilisé dans cette sous-étape est de préférence HMIPV6.

A réception de ce message, l'agent mère EA supprime de sa base de données la première adresse temporaire régionale RCoA-1 stockée en correspondance de l'adresse IP mère, elle-même stockée en correspondance de la seconde adresse temporaire régionale RCoA-2. Puis, il génère à destination du premier noeud mobile T1 (F37) un message d'acquittement d'enregistrement de lien de type « Binding Ackowledgement », afin de lui signaler qu'il a effectivement supprimé l'enregistrement de son ancienne première adresse temporaire régionale RCoA-1.

Le premier noeud mobile T1 étant désormais enregistré auprès de son agent mère EA avec sa seconde adresse temporaire régionale RCoA-2, les paquets de données issus d'un second noeud T2 (éventuellement mobile) lui sont désormais transmis classiquement via son agent mère EA (F38), le second point d'ancrage P2 (F39), désigné par la seconde adresse temporaire régionale RCoA-2, et le second routeur d'accès R3 (F40), désigné par la seconde adresse temporaire locale LCoA-2 (stockée dans R3 suite à la sous-étape F25).

Il est important de noter que les premier et second procédés, décrits ci-avant, peuvent coexister au sein d'un même réseau IP à gestion de mobilité hiérarchique afin que les situations de micro-mobilité et de macro-mobilité puissent être traités. Cela impose que les noeuds mobiles soient adaptés de manière à intégrer une donnée d'information (S), signalant un double adressage temporaire, aussi bien dans des messages de type « local binding update » que dans des messages de type « binding update ». En outre cela impose que des agents mère adaptés conformément à l'invention coexistent avec des points d'ancrage de mobilité également adaptés conformément à l'invention.

L'invention ne se limite pas aux modes de réalisation de procédés de transfert de communication, d'équipement agent mère et de point d'ancrage de mobilité décrits ci-avant, seulement à titre d'exemple, mais elle englobe toutes les variantes que pourra envisager l'homme de l'art dans le cadre des revendications ci-après.

## Revendications

1. Procédé de transfert d'une communication, impliquant un équipement mobile (T1) ayant établi avec un équipement de communication (T2) une communication sur IP via un équipement agent (EA) assurant une fonction d'agent mère pour ledit équipement mobile (T1), un premier point d'ancrage (P1) et un premier équipement d'accès radio (R1) appartenant à un réseau de communication à protocole Internet (IP) et à gestion de mobilité de type hiérarchique, ledit équipement mobile (T1) disposant de premières adresses temporaires locale et régionale enregistrées auprès dudit premier point d'ancrage (P1) et dudit équipement agent mère (EA), **caractérisé en ce qu'**il consiste, lorsque ledit équipement mobile (T1) détecte en se déplaçant un second équipement d'accès (R3), connecté à un second point d'ancrage (P2) dudit réseau, lui-même connecté audit équipement agent mère (EA), à effectuer la combinaison d'étapes suivante :
i) communiquer audit équipement mobile (T1) le préfixe d'adresse dudit second équipement d'accès (R3) afin qu'il constitue à partir de celui-ci des secondes adresses temporaires locale et régionale,
ii) communiquer lesdites secondes adresses temporaires locale et régionale audit premier point d'ancrage (P1) pour qu'il enregistre cette seconde adresse temporaire locale en correspondance de la seconde adresse temporaire régionale,
iii) communiquer ladite seconde adresse temporaire régionale et une adresse IP mère dudit équipement mobile (T1), ainsi qu'une donnée d'information présentant une valeur signalant un double adressage temporaire audit équipement agent mère (EA) pour qu'il enregistre cette seconde adresse temporaire régionale en correspondance de ladite adresse IP mère, puis transmette les paquets destinés audit équipement mobile (T1) aux premier (P1) et second (P2) points d'ancrage désignés par lesdites première et seconde adresses temporaires régionales stockées en correspondance de ladite adresse IP mère,
iv) déconnecter ledit équipement mobile (T1) du premier équipement d'accès (R1), puis supprimer dudit équipement agent mère (EA) l'enregistrement de la première adresse temporaire régionale de l'équipement mobile (T1) en correspondance de ladite adresse IP mère, afin de transmettre à ce dernier les paquets qui lui sont destinés, via ledit équipement agent mère (EA), ledit second point d'ancrage (P2) et ledit second équipement d'accès (R3).

2. Procédé selon la revendication 1, **caractérisé en ce qu'**à l'étape i) ledit second équipement d'accès (R3) transmet audit équipement mobile (T1) un message de type « avertissement de routeur » comportant au moins son préfixe d'adresse.

3. Procédé selon l'une des revendications 1 et 2, **caractérisé en ce qu'**à l'étape i) ledit équipement mobile (T1) constitue ses secondes adresses temporaires locale et régionale au moyen d'une procédure dite d'auto-configuration sans état.

4. Procédé selon l'une des revendications 1 à 3, **caractérisé en ce qu'**à l'étape ii) ledit équipement mobile (T1) communique lesdites secondes adresses temporaires locale et régionale audit second point d'ancrage (P2) au moyen d'un message d'enregistrement de lien.

5. Procédé selon la revendication 4, **caractérisé en ce qu'**à l'étape ii) ledit second point d'ancrage (P2) transmet audit équipement mobile (T1) un message d'acquittement d'enregistrement de lien après avoir procédé à l'enregistrement de ladite seconde adresse temporaire locale en correspondante de ladite seconde adresse temporaire régionale.

6. Procédé selon l'une des revendications 1 à 5, **caractérisé en ce qu'**à l'étape iii) ledit équipement mobile (T1) communique lesdites seconde adresse temporaire régionale, adresse IP mère et donnée d'information audit équipement agent mère (EA) au moyen d'un message d'enregistrement de lien.

7. Procédé selon la revendication 6, **caractérisé en ce qu'**à l'étape iii) ledit équipement agent mère (EA) transmet audit équipement mobiles (T1) un message d'acquittement d'enregistrement de lien après avoir procédé à l'enregistrement de ladite seconde adresse temporaire régionale en correspondance de ladite adresse IP mère et de ladite première adresse temporaire régionale.

8. Procédé selon l'une des revendications 1 à 7, **caractérisé en ce qu'**à l'étape iv) ledit équipement mobile (T1) transmet audit équipement agent mère (EA) une message d'enregistrement de lien comportant sa première adresse temporaire régionale et son adresse IP mère et lui demandant de supprimer l'enregistrement de cette première adresse temporaire régionale, de sorte qu'il ne conserve que l'enregistrement de la seconde adresse temporaire régionale en correspondance de l'adresse IP mère.

9. Procédé selon la revendication 8, **caractérisé en ce qu'**à l'étape iv) ledit équipement agent mère (EA) transmet audit premier équipement mobile (T1) un message d'acquittement d'enregistrement de lien après avoir procédé à la suppression de l'enregistrement de ladite première adresse temporaire régionale.

10. Equipement agent mère (EA) pour un réseau de communication à protocole Internet (IP) à gestion de mobilité de type hiérarchique, **caractérisé en ce qu'**il est agencé de manière à mettre en oeuvre une partie d'un procédé de transfert de communication selon l'une des revendications 1 à 9.

11. Procédé de transfert de communication selon l'une des revendications précédentes dans les réseaux de communication de type MIPv6 et à gestion de mobilité hiérarchique.

## Patentansprüche

1. Verfahren zum Weiterreichen einer Kommunikation, ein Mobilgerät (T1) umfassend, das mit einer Kommunikationsvorrichtung (T2) per IP eine Kommunikation über ein Agentgerät (Equipement Agent, EA) hergestellt hat, eine Home-Agent-Funktion für besagtes Mobilgerät (T1) gewährleistend, sowie weiterhin einen ersten Verankerungspunkt (P1) und ein erstes Funkzugangsgerät (R1) umfassend, die zu einem Internetprotokoll-Kommunikationsnetz (IP-Netz) mit hierarchischer Mobilitätsverwaltung gehören, wobei besagtes Mobilgerät (T1) erste befristete, lokale und regionale Adressen anordnet, die bei besagtem erstem Verankerungspunkt (P1) und besagtem Stamm-Agentgerät (EA) registriert sind, **dadurch gekennzeichnet, dass** das Verfahren dann, wenn besagtes Mobilgerät (T1), während es sich bewegt, ein zweites Zugangsgerät (R3) feststellt, das mit einem zweiten Verankerungspunkt (P2) besagten Netzes verbunden ist, welcher seinerseits mit besagtem Stamm-Agentgerät (EA) verbunden ist, darin besteht, die Kombination folgender Schritte auszuführen:
i) dem besagten Mobilgerät (T1) das Adressvorzeichen besagten zweiten Zugangsgeräts (R3) mitteilen, damit es auf dessen Grundlage zweite befristete, lokale und regionale Adressen bildet,
ii) die besagten zweiten befristeten, lokalen und regionalen Adressen dem besagten ersten Verankerungspunkt (P1) mitteilen, damit er diese zweite befristete, lokale Adresse entsprechend der zweiten, befristeten regionalen Adresse registriert,
iii) besagte zweite, befristete regionale Adresse und eine Stamm-IP-Adresse besagten Mobilgeräts (T1) mitteilen, ebenso wie ein Informationsdatum, welches einen Wert enthält, der besagtem Stamm-Agentgerät (EA) eine doppelte befristete Adressierung signalisiert, damit es besagte zweite, befristete regionale Adresse entsprechend der besagten Stamm-IP-Adresse registriert, und weiterhin die an besagtes Mobilgerät (T1) gerichteten Pakete an den ersten (P1) und den zweiten (P2) Verankerungspunkt übermitteln, die von besagter erster und besagter zweiter, befristeter regionaler Adresse designiert werden, die entsprechend der besagten Stamm-IP-Adresse gespeichert wurden,
iv) das Trennen besagtem Mobilgeräts (T1) vom ersten Zugangsgerät (R1), daraufhin das Löschen der Registrierung der ersten befristeten, regionalen Adresse des Mobilgeräts (T1) von besagtem Stamm-Agentgerät (EA) entsprechend besagter Stamm-IP-Adresse, um an Letztere über besagtes Stamm-Agentgerät (EA), über besagten zweiten Verankerungspunkt (P2) und über besagtes zweites Zugangsgerät (R3) die an sie gerichteten Pakete zu übermitteln.

2. Verfahren nach Anspruch 1, **dadurch gekennzeichnet, dass** in Schritt i) besagtes zweites Zugangsgerät (R3) an besagtes Mobilgerät (T1) eine Nachricht des Typs "Routerwarnung" übermittelt, die mindestens sein Adressvorzeichen umfasst.

3. Verfahren nach einem der Ansprüche 1 und 2, **dadurch gekennzeichnet, dass** in Schritt i) besagtes Mobilgerät (T1) seine zweiten befristeten, lokalen und regionalen Adressen anhand eines Verfahrens zur sogenannten statuslosen automatischen Konfiguration bildet.

4. Verfahren nach einem der Ansprüche 1 bis 3, **dadurch gekennzeichnet, dass** in Schritt ii) besagtes Mobilgerät (T1) die besagten zweiten, befristeten, lokalen und regionalen Adressen anhand einer Verbindungsregistrierungsnachricht besagtem zweitem Verankerungspunkt (P2) mitteilt.

5. Verfahren nach Anspruch 4, **dadurch gekennzeichnet, dass** in Schritt ii) besagter zweiter Verankerungspunkt (P2) an besagtes Mobilgerät (T1) eine Meldung zur Bestätigung der Verbindungsregistrierung übermittelt, nachdem er die Registrierung der besagten zweiten, befristeten lokalen Adresse entsprechend der besagten zweiten, befristeten regionalen Adresse vorgenommen hat.

6. Verfahren nach einem der Ansprüche 1 bis 5, **dadurch gekennzeichnet, dass** in Schritt iii) besagtes Mobilgerät (T1) die besagte zweite, befristete regionale Adresse, die Stamm-IP-Adresse und das Informationsdatum anhand einer Verbindungsregistrierungsnachricht besagtem Stamm-Agentgerät (EA) mitteilt.

7. Verfahren nach Anspruch 6, **dadurch gekennzeichnet, dass** in Schritt iii) besagtes Stamm-Agentgerät (EA) an besagtes Mobilgerät (T1) eine Meldung zur Bestätigung der Verbindungsregistrierung übermittelt, nachdem es die Registrierung der besagten zweiten, befristeten regionalen Adresse entsprechend der besagten Stamm-IP-Adresse und der besagten ersten, befristeten regionalen Adresse vorgenommen hat.

8. Verfahren nach einem der Ansprüche 1 bis 7, **dadurch gekennzeichnet, dass** in Schritt iv) besagtes Mobilgerät (T1) an besagtes Stamm-Agentgerät (EA) eine Verbindungsregistrierungsnachricht sendet, welche die erste befristete regionale Adresse und seine Stamm-IP-Adresse umfasst und bei letzterem anfordert, die Registrierung der besagten ersten, befristeten regionalen Adresse zu löschen, dergestalt, dass es nur die Registrierung der zweiten befristeten regionalen Adresse entsprechend der Stamm-IP-Adresse erhalten bleibt.

9. Verfahren nach Anspruch 8, **dadurch gekennzeichnet, dass** in Schritt iv) besagtes Stamm-Agentgerät (EA) an besagtes erstes Mobilgerät (T1) eine Meldung zur Bestätigung der Verbindungsregistrierung übermittelt, nachdem es die Löschung der Registrierung der besagten ersten, befristeten regionalen Adresse vorgenommen hat.

10. Stamm-Agentgerät (EA) für ein Internetprotokoll-Kommunikationsnetz (IP-Netz) mit hierarchischer Mobilitätsverwaltung, **dadurch gekennzeichnet, dass** es dafür ausgelegt ist, um eine Teil eines Verfahrens zum Weiterreichen einer Kommunikation nach einem belieben der Ansprüche 1 bis 9 auszuführen.

11. Verfahren zum Weiterreichen einer Kommunikation nach einem der vorgenannten Ansprüche in Kommunikationsnetzen des Typs MIPv6 mit hierarchischer Mobilitätsverwaltung.

## Claims

1. A communication handover method, involving a mobile device (T1) that had established with a communication device (T2) a communication over IP via an agent device (EA) serving as a home agent for said mobile device (T1), a first anchor point (P1) and a first radio access device (R1) belonging to an Internet protocol (IP) communication network with hierarchical mobility management, said mobile device (T1) having first temporary local and regional addresses recorded with said first anchor point (P1) and with said home agent device (EA), **characterized in that** it consists, when said mobile device (T1), while moving, detects a second access device (R3) connected to a second anchor point (P2) of said network, itself connected to said home agent device (EA), of performing the following combination of steps:
i) communicating to said mobile device (T1) the address prefix of said second access device (R3) so that it can create from it second temporary local and regional addresses,
ii) communicating said second temporary local and regional addresses to said first anchor point (P1) so that it can save that second temporary local address as a match for the second temporary regional address,
iii) communicating said second temporary regional address and a home IP address of said mobile device (T1), as well as information data having a value indicating temporary double addressing to said home agent device (EA) so that it can save that second temporary regional address as a match for said home IP address, then send the packets intended for said mobile device (T1) to the first (P1) and second (P2) anchor points designated by said first and second temporary regional addresses stored as a match for said home IP address,
iv) disconnecting said mobile device (T1) from the first access device (R1), then deleting from said home agent device (EA) the record of the first temporary regional address of the mobile device (T1) as a match for said home IP address, in order to transmit to the latter the packets intended for it, via said home agent device (EA), said second anchor point (P2) and said second access device (R3).

2. A method according to claim 1, **characterized in that** in step i) said second access device (R3) sends to said mobile device (T1) a "router advertisement" message comprising at least its address prefix.

3. A method according to any one of the claims 1 and 2, **characterized in that** in step said mobile device (T1) creates its second temporary local and regional addresses i) by means of a so-called stateless autoconfiguration procedure.

4. A method according to any one of the claims 1 to 3, **characterized in that** in step ii) said mobile device (T1) communicates said second temporary local and regional addresses to said second anchor point (P2) by means of a binding update message.

5. A method according to claim 4, **characterized in that** in step ii) said second anchor point (P2) sends to said mobile device (T1) a binding acknowledgement message after having saved said second local temporary address as a match for said second temporary regional address.

6. A method according to any one of the claims 1 to 5, **characterized in that** in step iii) said mobile device (T1) communicates said second temporary regional address, home IP address, and information data to said home agent device (EA) by means of a binding update message.

7. A method according to claim 6, **characterized in that** in step iii) said home agent device (EA) sends said mobile device (T1) a binding acknowledgement message after having saved said second temporary regional address as a match for said home IP address and for said first temporary regional address.

8. A method according to any one of the claims 1 to 7, **characterized in that** in step iv) said mobile device (T1) sends said home agent device (EA) a binding update message comprising its first temporary regional address and its home IP address and asking it to delete the saved first temporary regional address, so that it retains only the saved second temporary regional address as a match for the home IP address.

9. A method according to claim 8, **characterized in that** in step iv) said home agent device (EA) sends said first mobile device (T1) a binding acknowledgement message after having deleted said saved first temporary regional address.

10. A home agent device (EA) for an Internet protocol (IP) communication network with hierarchical mobility management, **characterized in that** it is arranged to implement a portion of a communication handover method according to any one of the claims 1 to 9.

11. A communication handover method according to any one of the preceding claims in MIPv6 and hierarchical mobility management communication networks.
